# EUROPÄISCHE PATENTANMELDUNG

(11) **EP 0 971 526 A1**
(43) Veröffentlichungstag der Anmeldung: **12.01.2000**
(21) Anmeldenummer: 98122795.2
(22) Anmeldetag: 01.12.1998
(51) Int. Cl.: H04M 17/02

(54) **Aus einem Wertkartenfernsprecher und einem ihm zugeordneten Münzmodul bestehendes Kommunikationsendgerät**

(30) Priorität: 08.07.1998 DE 29812192 U
(71) Anmelder: SIEMENS AKTIENGESELLSCHAFT, 80333 München (DE)
(72) Erfinder: Honsel, Sigolf, 81369 München (DE)

(57) **Zusammenfassung**

Das Kommunikationsendgerät ist mit einer aktustischen Bedienerführung ausgestattet und weist eine einen Aufbruchversuch erkennende Sensorik auf, über die eine Kenndaten des Gerätes enthaltende Meldung per Sprachausgabe an eine vorbestimmte Empfangsstelle abgegeben wird.

## Beschreibung

Öffentlich zugängliche Automaten, die gegen Einwurf von Münzen Dienstleistungen erbringen, werden häufig aufgebrochen, um an den in der Geldkassette angesammelten Betrag zu gelangen. Dies trifft in hohem Maße auch für Münzfernsprecher zu, bei denen zur Verhinderung des Aufbruchs viele Sicherheitsmaßnahmen ergriffen worden sind. Neben der mechanischen Absicherung der Münzkassette selbst waren bestimmte Typen von Münzfernsprechern so geschaltet, daß bei Unregelmäßigkeiten, z. B. das Fehlen der Münzkassette für einen eine Minute überschreitenden Zeitraum selbständig eine Telefonleitung belegt und eine vorher programmierte Teilnehmernummer angewählt wurde. Bei diesem angewählten Teilnehmer war ein spezielles Signalempfangsgerät an die Telefonleitung angeschlossen, das die vom Münzfernsprecher abgesetzte Meldung empfing. Diese Meldung setzte sich unter anderem aus der Standortnummer des Münztelefons, der Zeitangabe sowie der Mitteilung des Fehlens der Münzkassette zusammen.

Als nachteilig ist es in diesem Fall anzusehen, daß zum Empfang der Nachricht ein spezielles Signalempfangsgerät zum Einsatz gelangen muß, was aufgrund geringer Stückzahlen entsprechend teuer ist. Ein weiterer Nachteil besteht darin, daß bei Abgabe der Meldung die Münzkassette bereits fehlt, d. h., der Aufbruch hat bereits stattgefunden und es ist kostbare Zeit vergangen, den Dieb zu fassen.

Aufgabe der vorliegenden Erfindung ist es daher, das Kommunikationsendgerät so zu gestalten, daß Manipulationsversuche, insbesondere Aufbruchversuche rechtzeitig erkannt, gemeldet und somit verhindert werden können.

Gemäß der Erfindung wird diese Aufgabe dadurch gelöst, daß das Kommunikationsendgerät mit einer akustischen Bedienerführung ausgestattet ist und eine einen Aufbruchversuch erkennende Sensorik aufweist, über die eine Kenndaten des Gerätes enthaltende Meldung per Sprachausgabe an eine vorbestimmte Empfangsstelle abgegeben wird.

Da das Kommunikationsendgerät mit einer akustischen Bedienerführung ausgestattet ist, besteht in diesem Fall die Möglichkeit, bei einem Aufbruchversuch eine Meldung per Sprachausgabe an einen vorbestimmten Teilnehmer, z. B. an ein Polizeirevier zu senden. In diesem Fall wird lediglich ein handelsübliches Telefonendgerät benötigt, um diese Meldung zu empfangen, so daß sich Kosten für ein speziell zum Empfang derartiger Meldung hergestelltes Empfangsgerät erübrigen. Durch die Sensorik wird ein Aufbruchversuch frühzeitig erkannt, so daß noch Maßnahmen ergriffen werden können, den Täter am Tatort zu stellen. Dadurch, daß die abgesetzte Meldung Kenndaten des Kommunikationsendgerätes wie z. B. Standort, Uhrzeit usw. enthält, wird das Auffinden des Tatortes wesentlich erleichtert.

Hierbei kann die Sensorik so ausgelegt sein, daß sie auf Erschütterungen, z. B. Ansetzen von hebelähnlichen Werkzeugen oder Bohrmaschinen anspricht. Weiter ist es denkbar, eine den Raum der Münzkassette überwachende Sensorik vorzusehen. Dies kann z. B. durch optisch, magnetisch oder lichtmäßig erzeugte Felder realisiert werden, bei deren Änderung sofort eine Meldung abgesetzt wird.

Die Erfindung soll im folgenden anhand eines Ausführungsbeispiels näher erläutert werden.

Es zeigt jeweils in perspektivischer Ansicht
Figur 1 eine erste Ausführungsform eines auf ein separates Münzmodul angeordneten Wertkartenfernsprechers,
Figur 2 eine zweite Ausführungsform eines mit einem separaten Münzmodul verbundenen Wertkartenfernsprechers,
Figur 3 eine dritte Ausführungsform eines mit einem separaten Münzmodul verbundenen Wertkartenfernsprechers.

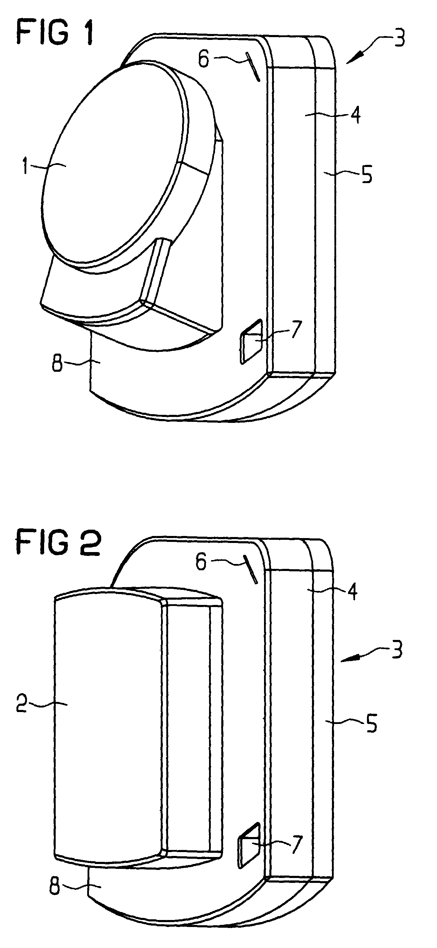

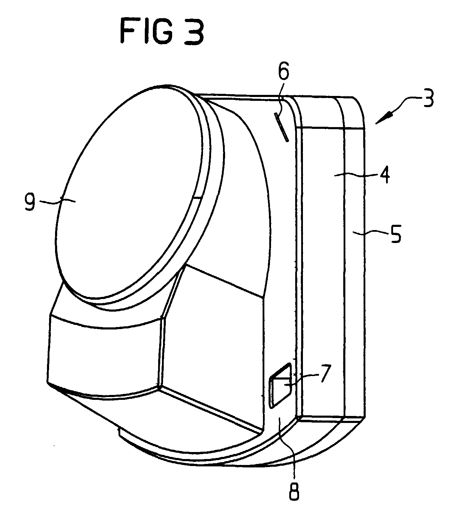

Bei den vorliegenden Anordnungen soll bei einem Wertkartenfernsprecher die Möglichkeit geschaffen werden, zum Telefonieren neben der Wertkarte auch Münzen zu verwenden. Zu diesem Zweck sind den in den Figuren 1, 2 und 3 dargestellten Wertkartenfernsprechern 1, 2 und 9 jeweils das gleiche Münzmodul 3 zugeordnet. Diese beiden jeweils kombinierten Geräte 1 und 3 bzw. 2 und 3 bzw. 9 und 3 sind miteinander elektrisch und mechanisch verbunden.

Das Münzmodul 3 ist als separates Bauteil gestaltet und besteht aus den beiden Gehäuseteilen 4 und 5, die zu Wartungs- und Montagezwecken bzw. zum Kassettenwechsel über hier nicht dargestellte Scharniere schwenkbar verbunden sind. Beide Gehäuseteile 4 und 5 sind im geschlossenen Zustand durch ein von außen nicht zugängliches, nur elektrisch betätigbares Schloß miteinander verriegelt.

Die drei Wertkartenfernsprecher sind in den Ausführungsbeispielen nur angedeutet, ohne Details wie Kartenaufnahme, Hörer und Anschlußschnur, Sondertasten usw. näher zu zeigen. Hierbei ist lediglich die jeweilige außermittige Befestigung der Wertkartenfernsprecher 1, 2 und 9 auf dem Münzmodul 3 von Bedeutung, da durch diese Anordnung auf der in der Bildebene rechts befindlichen Vorderfront 8 des Gehäuseteils 4 hinreichend Platz zur Verfügung steht, um den als Schlitz gestalteten Münzeinwurf 6 sowie die Münzrückgabe 7 vorzusehen. Durch eine derartige Anordnung von Wertkartenfernsprecher 1 und 2 sowie Münzeinwurf 6 und Münzrückgabe 7 wird dem Benutzer signalisiert, daß er dieses öffentliche Kommunikationsendgerät wahlweise mit Münzen oder Wertkarten betreiben kann. Innerhalb des Münzmoduls können Vorrichtungen zur elektronischen Prüfung und Weiterleitung von Münzen sowie eine Münzkassette vorgesehen werden.

Das Kommunikationsendgerät ist mit einer akustischen Bedienerführung ausgestattet und ist in der Lage, bei einem Aufbruchversuch selbständig eine Telefonleitung zu belegen und per Sprachausgabe über diese Leitung eine Meldung an eine vorbestimmte Empfangsstelle, z. B. an ein Polizeirevier abzugeben. Die Belegung der Telefonleitung wird durch eine Sensorik bewirkt, die im Kommunikationsendgerät vorgesehen ist und z. B. auf Erschütterung oder Änderung von raumüberwachenden und optisch, magnetisch oder lichtmäßig erzeugten Feldern reagiert.

### Bezugszeichenliste

- 1: Wertkartenfernsprecher
- 2: Wertkartenfernsprecher
- 3: Münzmodul
- 4: Gehäuseteil
- 5: Gehäuseteil
- 6: Münzeinwurf
- 7: Münzrückgabe
- 8: Vorderfront
- 9: Wertkartenfernsprecher

## Patentansprüche

1. Aus einem Wertkartenfernsprecher (1, 2, 9) und einem ihm zugeordneten Münzmodul (3) bestehendes Kommunikationsendgerät, **dadurch gekennzeichnet,** daß das Kommunikationsendgerät mit einer akustischen Bedienerführung ausgestattet ist und eine einen Aufbruchversuch erkennende Sensorik aufweist, über die eine Kenndaten des Gerätes enthaltende Meldung per Sprachausgabe an eine vorbestimmte Empfangsstelle abgegeben wird.

2. Kommunikationsendgerät nach Anspruch 1, **dadurch gekennzeichnet,** daß die Sensorik auf Erschütterung oder raumüberwachende Mittel anspricht.

3. Kommunikationsendgerät nach Anspruch 2**,dadurch gekennzeichnet,** daß die Sensorik auf Änderung von magnetischen, optisch oder lichtmäßig erzeugten Feldern reagiert.
